# EUROPÄISCHE PATENTANMELDUNG

(11) **EP 1 650 246 A1**
(43) Veröffentlichungstag der Anmeldung: **26.04.2006**
(21) Anmeldenummer: 05022184.5
(22) Anmeldetag: 12.10.2005
(51) Int. Cl.: C08G 59/18, C08G 65/00

(54) **Alkoxylierte Epoxyd-Amin-Addukte und deren Verwendung**

(30) Priorität: 20.10.2004 DE 102004050955
(71) Anmelder: Byk-Chemie GmbH, 46483 Wesel (DE)
(72) Erfinder: Haubennestel, Karlheinz, 46487 Wesel (DE); Krappe, Udo, Dr., 46446 Emmerich (DE); Boemer, Joerg, 46485 Wesel (DE)
(74) Vertreter: Leifert & Steffan

(57) **Zusammenfassung**

Die Erfindung betrifft alkoxylierte Epoxyd-Amin-Addukte mit einem zahlenmittleren Molekulargewicht vom mehr als 500 g/Mol, die herstellbar sind durch die Umsetzung von
A) Mono- und/oder Polyepoxyden mit mindestens 8 Kohlenstoffatomen mit
B) primären und/oder sekundären Aminen und/oder primären und/oder sekundären Alkanolaminen und/oder sekundären Alkylalkanolaminen unter Bildung eines Addukts mit einer oder mehreren sekundären OH-Gruppen und nachfolgende Alkoxylierung des Addukts mit
C) Alkylenoxyden.

Die Erfindung betrifft auch ein Verfahren zur Herstellung der alkoxylierten Epoxyd-Amin-Addukte sowie deren Verwendung als Netz- und Dispergiermittel für organische und anorganische Pigmente und Füllstoffe. Die Erfindung betrifft weiterhin pulver- oder faserförmige Feststoffe, die mit den alkoxylierten Epoxyd-Amin-Addukten beschichtet sind.

## Beschreibung

Die vorliegende Erfindung betrifft neuartige aminische Polyalkylenoxyde auf Basis von Epoxy-Amin-Addukten sowie die Umsetzungsprodukte dieser aminischen Polyalkylenoxyde. Weiterhin betrifft diese Erfindung die Verwendung der aminischen Polyalkylenoxyde als Netz- und Dispergiermittel für organische und anorganische Pigmente sowie Füllstoffe in organischen und wässrigen Systemen und in flüssige Systeme einzuarbeitende pulver- oder faserförmige Feststoffe, die mit solchen Dispergiermitteln beschichtet sind.

Die vorgenannten aminischen Polyalkylenoxyde eignen sich besonders zur Herstellung von wässrigen oder lösungsmittelbasierten Pigmentkonzentraten (Pigmentpasten) sowie zur Stabilisierung von Feststoffteilchen in Bindemitteln, Lacken, Kunststoffen und Kunststoffmischungen. Diese Produkte reduzieren die Viskosität solcher Systeme, verbessern Fliesseigenschaften und Lagerstabilitäten und erhöhen die Farbstärke.

Um Feststoffe in flüssige Medien einbringen zu können, sind hohe mechanische Kräfte erforderlich. Es ist üblich Dispergiermittel einzusetzen, um diese Dispergierkräfte zu erniedrigen und um den zur Deflockulierung der Feststoffteilchen notwendigen Gesamtenergieeintrag in das System und damit auch die Dispergierzeit so gering wie möglich zu halten. Hierbei handelt es sich meist um grenzflächenaktive Stoffe, von anionischer, kationischer oder neutraler Struktur. Diese Stoffe werden in kleiner Menge entweder direkt auf den Feststoff aufgebracht oder dem Dispergiermedium zugesetzt. Bekannt ist weiterhin, dass es auch nach vollständiger Deflockulierung der Feststoffagglomerate in Primärteilchen, nach dem Dispergierprozess zu Reagglomerationen kommt, wodurch der Dispergieraufwand teilweise oder vollständig zunichte gemacht wird. Als Folge der unzulänglichen Dispergierung bzw. durch Reagglomeration kommt es zu unerwünschten Effekten wie Viskositätsanstieg in flüssigen Systemen, Farbtondrift und Glanzverlusten in Lacken und Beschichtungen sowie Verringerung der mechanischen Festigkeit in Kunststoffen.

Eine Vielzahl verschiedener Substanzen findet heute Verwendung als Dispergiermittel für Pigmente und Füllstoffe. Ein Überblick über vorhandene Patentliteratur findet sich in EP 0 318 999 A2 (Seite 2, Zeile 24-26). Neben sehr einfachen, niedermolekularen Verbindungen wie z.B. Lecithin, Fettsäuren und deren Salzen und Alkylphenolethoxylaten werden auch komplexe Strukturen als Dispergiermittel eingesetzt.

Unter anderem werden auch Umsetzungsprodukte von Epoxyden mit Amin-haltigen Verbindungen als Netz- und Dispergiermittel eingesetzt. So beschreiben US Pat. Nr. 5,128,393 und US Pat. Nr. 4,710,561 Umsetzungsprodukte von Monoepoxyden mit Aminoimidazolinen. DE 690 02 806 T2 (US 5128393 A) beschreibt die Verwendung von Reaktionsprodukten aus Mono- oder Polyepoxyden mit Aminen, die eine Imidazolin-Gruppierung erhalten, als Dispergiermittel.

(Poly-) Epoxyde sind seit langem als Bestandteile von Bindemitteln bekannt. Solche Systeme werden oftmals mit Aminen als Härterkomponenten in Kontakt gebracht und ausgehärtet. In neueren Veröffentlichungen zu diesem Themenkomplex werden spezielle Amine oder Amin-Epoxyd-Addukte als Härter für Epoxyd-Harze beschrieben.

So finden sich selbstdispergierbare härtbare Epoxyd-Harze durch Umsetzungen von aromatischen Polyepoxyden mit Polyoxyalkylenaminen im Äquivalentverhältniss (Epoxyequivalent : Aminequivalent) zwischen 1: 0,1 und 1 . 0,28 in DE 198 58 920 A1 (US 6506821 B1). Da solche Verbindungen einen erheblichen Gehalt an EpoxydGruppen tragen sind sie als Netz- und Dispergiermittel ungeeignet, da zu einen die hergestellten Pigmentkonzentrate nicht ausreichen lagerstabil sind, zum anderen die breite Verträglichkeit mit verschiedenen Bindemitteln nicht gegeben ist. Ähnliche Produkte werden auch in US-A-3 945 964 sowie US-A-4 485 229 als wässrige Emulgiermittel beschrieben. Weiterhin werden in US-A-4 051 195 und EP-A-0 245 559 Vernetzungsmittel auf Basis von Epoxyden mit Polyoxyalkylenaminen beschrieben, die auch noch im Sinne einer Michael-Reaktion mit Acrylsäureestern umgesetzt sind. Da auch diese Produkte als Vernetzerkomponente fungieren sollen, ist auch in diesen Beispielen eine hohe Dichte an vernetzungsfähigen Gruppen vorhanden, welche die Produkte als Dispergiermittel unbrauchbar machen. Diese Einschränkung trifft auch für Produkte gemäß WO 96/20971 zu, in denen Umsetzungsprodukte aus Epoxyd-Harzen mit Amin-Epoxyd-Addukten als selbstemulgierende härtbare Epoxyd-Harze beschrieben werden. Bei den vorgenannten Amin-Epoxyd-Addukten handelt es sich um Umsetzungsprodukte von Polyepoxyden mit einem Unterschuss an Polyoxyalkylendiaminen.

In EP-747 413 A2 werden als Emulgatoren Umsetzungsprodukte aus aliphatischen Polyolen mit Epoxyden mit mindestens 2 Epoxydgruppen pro Ring beschrieben. Diese Verbindungen tragen also keine versalzbaren N-Atome und zeigen somit nur geringe Affinität zu Pigmenten und Füllstoffen.

Allen vorgenannten Dispergiermitteln ist gemeinsam, dass sie jeweils nur für ein eng begrenztes Einsatzgebiet entwickelt wurden und daher speziell in Bezug auf eine gemeinsame Verwendung in Systemen stark unterschiedlicher Polarität nur bedingt eingesetzt werden können.

In sogenannten Universalabtönpasten, worunter man Pigmentpasten versteht, die hauptsächlich in der Bautenfarbenindustrie zum Abtönen (Einfärben) von wässrigen, colöserhaltigen oder lösungsmittelhaltigen Beschichtungssystemen verwendet werden, wurden lange Zeit Alkylphenolethoxylate bzw. deren Phosphorsäureester als Netz- und Dispergiermittel verwendet. Diese Substanzen zeichnen sich, im Gegensatz zu den oben als Dispergiermittel verwendeten Epoxyd-Addukten, durch breite Verträglichkeit in den verwendeten Bindemitteln aus. Aus toxykologischen Aspekten sind diese Substanzen aber in die Kritik geraten und in einigen Staaten unterliegen sie bereits strengen Restriktionen in ihrer Verwendung.

Alternativ zu den Alkylphenolethoxylaten werden Fettalkoholethoxylate bzw. deren Phosphorsäureester zur Herstellung von Abtönpasten verwendet. Die positiven Eigenschaften der Alkylphenolethoxylate in Bezug auf die Pigmentstabilisierung werden von den Fettalkoholethoxylaten in den meisten Fällen nicht erreicht. Außerdem ist die Neigung zur Stabilisierung von Schaum eine negative Begleiterscheinung vieler Fettalkoholethoxylate.

Neben den genannten Fettalkoholethoxylaten und deren Derivaten werden auch blockcopolymere Phosphorsäureester und deren Salze (DE-A-100 29 648/US 2002011183 A1) sowie Styroloxyd-haltige Polyalkylenoxyde (DE-A-199 40 797 /EP 0001078946 A1) als Dispergiermittel eingesetzt.

Als Stand der Technik auf dem Gebiet der basischen Polyalkylenoxyde können Verbindungen auf Basis von alkoxyliertem Ethylendiamin angesehen werden. Solche Substanzen sind kommerziell erhältlich z. B. unter dem Markennamen Tetronic oder Quadrol von der BASF AG (z. B. Tetronic RED 9040) sowie unter dem Markennamen Genapol (z. B. als Genapol ED 3060 oder PN 30) von der Clariant GmbH.

Weiterhin sind kommerziell Polyalkylenoxyd/Bisphenol A Polymere als Emulgatoren bzw. Netz- und Dispergiermittel erhältlich wie z. B. das Produkt Carbowax M20 ein Polyethylenoxyd/Bisphenol-A Polymeres der Union Carbide Cooporation. Diese Produkte enthalten allerdings keine Stickstoffatome.

In WO 02/16471 werden Blockcopolymere als Dispergiermittel beschrieben, die man durch Umsetzung von zumeist aromatischen Startalkoholen mit Ethylenoxyd und nachfolgender Umsetzung mit zumeist Propylenoxyd erhält. In dieser Schrift werden auch Umsetzungsprodukte von Aminen (z. B. N-phenyl-1-naphthylamin) mit Propylenoxyd beschrieben. Außerdem findet sich auf Seite 1, Abschnitt 3 eine Auflistung weiterer Patentliteratur, die zu diesem Themengebiet verfügbar ist. In diesem Patent und in der in diesem Patent erwähnten Literatur findet sich keine Hinweise auf Alkoxylierungen der sekundären Hydroxygruppe in den Umsetzungsprodukten von Aminen mit höhermolekularen Epoxyden. Auch die Substanzen aus WO 02/16471 zeigen nur schwache Affinität zu Pigmentoberflächen und sind daher zur Herstellung von z. B. Pigmentkonzentraten nur bedingt geeignet.

Der vorliegenden Erfindung lag daher die Aufgabe zugrunde, die zuvor beschriebenen Nachteile bekannter Dispergiermittel zu beseitigen, d.h. Dispergieradditive zu entwickeln, die bei guter Stabilisierung von Pigmenten oder Füllstoffen die Mahlgutviskosität der Lacke, Pasten oder Kunststoffformulierungen so weit senken, dass eine Verarbeitung bei hohem Füllgrad möglich ist. Gleichzeitig muss speziell bei Pigment- und Füllstoffpasten eine breite Verträglichkeit gewährleistet sein, um diese in vielen unterschiedlichen Bindemitteln und Überzugsmaterialien einsetzen zu können. Weiterhin ist es erforderlich, dass die verwendeten erfindungsgemäßen Dispergieradditive eine flockulationsfreie Mischbarkeit der Pasten, bzw. der mit diesen Pasten hergestellten Bindemittel, untereinander ermöglichen.

Überraschenderweise wurde gefunden, dass die nachfolgend beschriebenen aminischen Polyalkylenoxyde und/oder deren weitere Umsetzungsprodukte die beschriebenen Anforderungen erfüllen.

Bei diesen aminischen Polyalkylenoxyden handelt es sich um alkoxylierte Epoxyd-Amin-Addukte mit einem zahlenmittleren Molekulargewicht vom mehr als 500 g/Mol, die herstellbar sind durch die Umsetzung von
A) Mono- und/oder Polyepoxyden mit mindestens 8 Kohlenstoffatomen mit
B) primären und/oder sekundären Aminen und/oder primären und/oder sekundären Alkanolaminen und/oder sekundären Alkylalkanolaminen unter Bildung eines Addukts mit einer oder mehreren sekundären OH-Gruppen und nachfolgende Alkoxylierung des Addukts mit
C) Alkylenoxyden.

Die Komponenten A und B werden vorteilhaft in solchen Mengenverhältnissen miteinander umgesetzt, dass auf eine Epoxygruppe eine reaktive Aminogruppe eingesetzt wird. Abweichungen hiervon sind möglich, bringen jedoch keine besonderen Vorteile. Die Einsatzmenge der Komponente C ergibt sich aus dem Molekulargewicht dieser Komponente und dem angestrebten Molekulargewicht der alkoxylierten Epoxyd-Amin-Addukte.

Die aus den Komponenten A, B und C erhaltenen Epoxyd-Amin-Addukte sind hochwertige Netz- und Dispergiermittel. Sie können als solche in der Form, in der sie durch die zweistufige Reaktion erhalten werden, eingesetzt werden und lösen die vorstehend beschriebenen technischen Aufgaben. In manchen Fällen ist es jedoch wünschenswert, sie weiter zu modifizieren, um ihre Eigenschaften im Einzelfall an spezifische Anforderungen anzupassen, insbesondere um ihre Kompatibilität mit unterschiedlichen Pigmenten, Lacken und Kunststoffen zu erhöhen. Im folgenden werden entsprechende Modifizierungen beschrieben, die durch Reaktion mit den in den Epoxyd-Amin-Addukten vorhandenen Hydroxyl- und/oder Aminogruppen bewirkt werden können. Diese können bei der Modifizierung teilweise oder vollständig umgesetzt werden.

Die folgenden Modifizierungsreaktionen können bei Bedarf miteinander kombiniert werden, so dass mehrfach modifizierte Produkte entstehen. Falls mehrere Modifizierungsreaktionen nacheinander durchgeführt werden, ist darauf zu achten, dass bei der Durchführung der einzelnen Reaktionsschritte genügend reaktive Gruppen für eine oder mehrere nachfolgende Umsetzungen im Molekül erhalten bleiben.

Durch die Umsetzung der Komponenten A, B und C und die anschließende Modifizierung der erhaltenen Epoxyd-Amin-Addukte kann eine große Zahl von unterschiedlichen Netz- und Dispergiermittel hergestellt werden. Diese können einzeln oder miteinander kombiniert, beispielsweise als Mischung verschiedener Epoxyd-Amin-Addukte verwendet werden.

Die genannten Modifizierungen sind vorteilhafte Ausgestaltung der vorliegenden Erfindung und können realisiert werden durch:
a) die Umsetzung der bei der Alkoxylierung entstandenen Hydroxyfunktion mit Hydroxycarbonsäuren und/oder cyclischen Lactonen unter Ausbildung von (Poly)Estern,
b) die Veresterung oder Veretherung der bei der Alkoxylierung entstandenen Hydroxyfunktion,
c) die Umsetzung der bei der Alkoxylierung entstandenen Hydroxyfunktion mit (Poly)Isocyanaten oder Polyisocyanataddukten mit zumindest einer freien Isocyanatgruppe unter Ausbildung von Urethanen,
d) die Umsetzung mit Phosphorsäure oder Polyphosphorsäure und/oder sauren Phosphorsäure-estern und/oder Carbonsäuren unter Ausbildung der jeweiligen organischen Salze,
e) die Umsetzung, der bei der Alkoxylierung entstandenen Hydroxyfunktion zu sauren Phosphorsäureestern,
f) die Alkylierung oder Oxydation der Aminogruppe(n) unter Ausbildung von quaternären Ammoniumsalzen oder N-Oxyden.

Bei den unter A erwähnten Epoxyverbindungen kann es sich um Monoepoxyverbindungen , wie z. B. Styroloxyd, Alkylglycidylether mit zumindest 8 Kohlenstoffatomen (z. B. (C10-C16) Alkylglycidyl ether) und Alkyl-epoxyalkylester mit zumindest 8 Kohlenstoffatomen (z. B. 2,3-Epoxypropylneodecanoat) oder Polyepoxyverbindungen mit zumindest 8 Kohlenstoffatomen handeln, die einzeln oder im Gemisch eingesetzt werden können . Bevorzugt werden aromatenhaltige Epoxyverbindungen, da die mit diesen Epoxyden hergestellten erfindungsgemäßen aminischen Polyalkylenoxyde sehr gute Netz- und Dispergierqualitäten aufweisen. Besonders bevorzugt sind aromatenhaltige Polyepoxyde mit durchschnittlich 1,5 bis 5 Epoxyfunktionen pro Molekül, darunter ganz besonders bevorzugt die Epoxyde mit durchschnittlich 2 Epoxyfunktionen pro Molekül, da die daraus hergestellten aminischen Polyalkylenoxyde ausgezeichnete Netz- und Dispergierqualitäten aufweisen. Beispiele für diese aromatenhaltigen Polyepoxyde sind Polyglycidylether von polyfunktionellen Phenolen. Unter mehrwertigen Phenolen sollen Verbindungen verstanden werden, die in WO 96/20971 (Seite 16 Zeile 15 bis Seite 17 Zeile 18) beschrieben sind. Unter diesen Phenolen sind bevorzugt Diphenole oder mehrkernige Diphenole.

Typische Beispiele aus der Gruppe dieser aromatenhaltigen Polyepoxyde sind Umsetzungsprodukte von Diphenylolpropan (Bisphenol A) mit Epichlorhydrin und deren höhere Homologe, die z. B. unter den Markenbezeichnung D.E.R. (z. B. als D.E.R. 331) oder Epikote (z. B. als Epikote 828 oder 1001) von der DOW Chemical Company bzw. Resolution Performance Products angeboten werden.

Weitere Beispiele für geeignete Epoxyverbindungen finden sich beispielsweise in WO/01/05900 auf den Seiten 8 und 9.

Eine weitere bevorzugte Ausführungsform der erfindungsgemäßen Produkte stellen Umsetzungen mit Edukten auf Basis von Novolaken, wie z. B. in DE-A-3623297 beschrieben werden, da.

Bei polyfunktionellen Epoxyden können neben der Addition der erfindungsgemäßen Amine auch andere Reaktionen an den Epoxygruppen durchgeführt werden, die weder die Addition der Amine noch die nachfolgend Alkoxylierung beeinträchtigen. So kann z. B. bei polyfunktionellen Epoxyden, vor oder nach der Addition eines der erfindungsgemäßen Amine, ein Teil der Epoxygruppen mit Carbonsäuren unter Ausbildung von β-Hydroxyestern umgesetzt werden.

Bezüglich den unter B erwähnten primären und/oder sekundären Aminen sind besonders geeignet die aliphatischen, sekundären Amine, da mit diesen Aminen die Reaktionsführung bei der Herstellung der Epoxyd-Amin-Addukte besonders gut zu kontrollieren ist. Beispiele für die vorgenannten sekundären Amine sind Dialkylamine, Alkylcycloalkylamine, Dicycloalkylamine und cylische aliphatische Amine wie Pyrrolidin, Piperidin und Morpholin.

Unter den Alkylaminen und Dialkylaminen besonders bevorzugte Vertreter sind Amine, bei denen die Anzahl der Kohlenstoffatome in den Alkyl- und/oder Cycloalkylketten zwischen 3 und 28 liegt, wie beispielsweise Propylamin, Dipropylamin, Butylamin, Dibutylamin, Ethylhexylamin, Diethylhexylamin und jeweils höhere Homologe, Methylcyclohexylamin und höhere Homologe, Cyclopentylamin, Cyclohexylamin, Dicyclopentylamin, Dicyclohexylamin, da bei diesen Produkten, auf Grund des hohen Siedepunktes der verwendeten Amine, die Umsetzung besonders einfach gelingt.

Eine weitere bevorzugte Ausführungsform sind Produkte auf Basis von primären und/oder sekundären Alkanolaminen und/oder Alkylalkanolaminen wie beispielsweise Ethanolamin, Diethanolamin oder Ethylethanolamin. Aus dieser Gruppe sind die Produkte auf Basis der Alkylalkanolamine besonders bevorzugt, da die Reaktionsführung bei der Herstellung der Epoxyd-Amin-Addukte besonders gut zu kontrollieren ist.

Die Verwendung von primären Aminen im Sinne der vorgenannten Umsetzungen ist limitiert durch die eventuelle Vernetzung des Reaktionsgutes. So ist es bei der Verwendung von Polyepoxydverbindungen in vielen Fällen nicht möglich equimolare Mengen an primären Aminen einzusetzen, da sonst die Reaktionslösung vernetzt. In solchen Fällen kann man z. B. Mischungen aus primären und sekundären Aminen einsetzen, um zu verhindern, dass es zu unerwünschten Vernetzungsreaktionen kommt.

Die zur Herstellung der erfindungsgemäßen Produkte verwendeten Amine können neben den Hydroxyfunktionen auch andere funktionelle Gruppen tragen, die sich bei der nachfolgenden Alkoxylierung inert verhalten, wie beispielsweise Alkoxyfunktionen, z. B. 3-Ethoxypropylamin, Bis(2-methoxyethylamin) und/oder aromatische Molekülbestandteile wie z. B. Methylbenzylamin. Unter den verwendeten Aminen mit Funktionalitäten, die sich bei der nachfolgenden Alkoxylierung inert verhalten, sind bevorzugte Ausführungsformen primäre und sekundäre Amine mit einer weiteren tertiären Aminogruppe wie z. B. Dimethyaminopropylamin.

Weiterhin bevorzugt unter den verwendeten Aminen mit weiteren Funktionalitäten, sind Amine mit einer primären oder sekundären Aminogruppe und einem stickstoffhaltigen Heterocyclus wie z. B. Aminopropylimidazol und 2-Pyrrolidinoethylamin.

Die Umsetzung der Epoxyfunktion mit den Aminogruppen unter Bildung der β-Hydroxyaminofunktion kann in Lösungsmitteln, bevorzugt aber in Substanz nach dem Fachmann bekannten Verfahren durchgeführt werden. Die Temperatur für die Reaktion zwischen der Epoxygruppe und dem Amin hängt von der Reaktivität der Addukte ab. Viele Epoxyde reagieren mit Aminen bereits bei RT, für wenig reaktive Edukte können Reaktionstemperaturen bis 160°C notwendig sein. Als besonders geeignete Reaktionstemperaturen liegen für die Umsetzung der erfindungsgemäßen Epoxyde mit den erfindungsgemäßen Aminen bei 80 - 140°C, da es bei dieser Temperatur zu einer schnellen Umsetzung ohne störende Nebenreaktionen kommt. Gegebenenfalls können dem Fachmann bekannte Katalysatoren zugesetzt werden, um die Umsetzung des Epoxyds mit dem Amin zu beschleunigen. Der Reaktionsverlauf lässt sich beispielsweise mittels HPLC analytisch verfolgen.

Die Alkoxylierung der Additionsprodukte aus den (Poly)-Epoxyden und den Aminen erfolgt in dem Fachmann bekannter Weise. Bei der Alkoxylierung kommt es zum Aufbau einer Polyalkoxykette sowohl an der bei der Additionsreaktion entstandenen β-Hydroxyfunktion als auch an den eventuell vorhandenen Hydroxyfunktionen des (Alkyl)-Alkanolamins und/oder an das, bei der Addition eines primaren Amins an ein Epoxyd, entstandene sekundäre Amin. Zur Alkoxylierung können beispielsweise Ethylenoxyd, Propylenoxyd, Butylenoxyd, Decenoxyd und/oder Styroloxyd verwendet werden.

Besonders bevorzugt unter den oben genannten Produkten sind Ausführungsformen, die sich durch die blockweise Anordnung der verschiedenen Alkylenoxyde auszeichnen, die also zum Beispiel zuerst einen Polyethylenoxydblock tragen, auf dem dann ein Polypropylenblock polymerisiert wurde. Weitere bevorzugte Ausführungsformen der basischen Alkoxylate sind Produkte, die zwischen 0 und 40°C flüssig sind.

Die unter d) geschilderte Salzbildung der aminischen Polyalkylenoxyde kann in Substanz oder in geeigneten Lösungsmitteln oder Trägermedien vorgenommen werden. Maßgeblich für den Einsatz von Lösungsmitteln sind die Viskositäten der entstandenen organischen Salze. So kommt es bei der Verwendung von Poly(Phosphorsäure) als saurer Komponente bereits bei kleinen Versalzungsgraden zu einem starken Viskositätsanstieg, der in den meisten Fällen den Einsatz von Lösungsmittel oder Trägermedien notwendig macht. Als Versalzungsgrad, darunter soll in diesem Zusammenhang das Verhältnis zwischen Säureäquivalenten der eingesetzten Säuren zu Aminäquivalenten der aminischen Polyalkylenoxyde verstanden werden, werden bevorzugt Werte zwischen 0,05 und 2,5 und besonders bevorzugt Werte zwischen 0,2 und 1 eingesetzt, da die letztgenannten Produkte die breiteste Verwendbarkeit für verschiedene Bindemittel und Feststoffe besitzen. Je nach verwendetem Feststoff, der zu dispergieren ist, können Produkte mit höherem oder mit niedrigeren Versalzungsgrad eingesetzt werden. So lassen sich z.B. bei der Dispergierung von sauren Rußsorten Versalzungsprodukte mit ausgezeichneter Dispergierqualität einsetzen, die einen hohen Überschuss an basischen Gruppen tragen, bei denen also das aminische Polyalkylenoxyd nicht vollständig mit der entsprechenden organischen Säure versalzt ist. Neben den Produkten, die nicht vollständig versalzt vorliegen, ist es durchaus sinnvoll für bestimmte Anwendungen auch Produkte einzusetzen, die, bezogen auf das Aminäquivalent, einen Säureüberschuss tragen (Versalzungsgrad >1), so z.B. wenn Feststoffe zur Dispergierung eingesetzt werden, die selbst basisch sind.

Bevorzugte Ausführungsformen für die Salze aus den aminischen Polyalkylenoxyden sind Salze mit Poly(Phosphorsäure) und/oder sauren Phosphorsäureestern, da diese Produkte sich durch besonders breite Verträglichkeit gegenüber verschiedenen Pigmenten und Bindemitteln auszeichnen. Bei den Salzen mit Carbonsäuren sind bevorzugte Ausführungsform Salze der aminischen Polyalkylenoxyde mit ungesättigten Fettsäuren sowie Zitronensäure, da diese Produkte ausgezeichnete Qualitäten als Netz- und Dispergiermittel besitzen.

Die bei der Alkoxylierung und der nachfolgend beschriebenen Polyveresterung entstehenden Hydroxygruppen können, wie unter e) erwähnt, in dem Fachmann bekannter Weise, in saure Phosphorsäureestergruppen überführt werden.

Die Synthese der sauren Phosphorsäureester ist beispielhaft in Houben-Weyl "Methoden der organischen Chemie" Band XYI/2, 4. Auflage, S. 143 ff. beschrieben. Je nach Art des eingesetzten Phosphorylierungsreagenzes (z.B. P₂O₅, PCI₅, Polyphosphorsäure (PPS) und nach der stöchiometrischen Einsatzmenge von Phosphorylierungsreagenz zu phosphorylierender Komponente (R¹OH) bilden sich Mono- oder Diester oder auch Gemische aus beiden Spezies. Mit Hilfe neuerer Phosphorylierungsmethoden ist es möglich den Gehalt an Phophorsäuremono- und diester in weiten Grenzen zu kontrollieren (EP 0 675 076, EP 01 207 135). Es ist auch möglich, dass bei der Phosphorylierungsreaktion ein Gemisch verschiedener zu phosphorylierender Komponenten eingesetzt wird. Wie dem Fachmann bekannt ist, können sich beim Einsatz höher kondensierter Polyphosphorsäuren neben den Phosphorsäureestern in wechselnden Anteilen auch Polyphosphorsäureester bilden.

Eine besondere Schwierigkeit bei der Phosphorylierung der erfindungsgemäßen aminischen Polyalkylenoxyde stellt das Vorhandensein der Aminogruppe dar. Eine Phosphorylierung der Hydroxygruppen mit z. B. Polyphosphorsäure ist nur dann problemlos möglich, wenn die Aminogruppe zuvor z. B. versalzt wurde. Diese Versalzung kann vorteilhaft dadurch geschehen, dass man bei sauren Phosphorylierungsreagenzien einen Überschuss einsetzt. Teilweise erzielt man erst bei erheblichen Überschüssen befriedigende Reaktionsgeschwindigkeiten.

Die unter b) aufgeführten erfindungsgemäßen sauren Phosphorsäureester der aminischen Polyalkylenoxyde eignen sich in Substanz oder aber neutralisiert in besonderer Weise zur Dispergierung von anorganischen Pigmenten wie z. B. Titandioxyd oder Eisenoxyd, da mit diesen Produkten besonders hohe Pigmentfüllgrade möglich sind.

Die bei der Alkoxylierung gebildeten Hydroxygruppen können wie unter b) angeführt verestert oder verethert werden. Die Veresterung oder Veretherung erfolgt in dem Fachmann bekannter Weise, mit der Einschränkung, dass die Aminogruppe in vielen Fällen zuerst z. B. versalzt werden muss, bevor man die Veresterung oder Veretherung der Hydroxygruppen in befriedigender Reaktionsgeschwindigkeit durchführen kann. Veresterte oder veretherte erfindungsgemäße aminische Polyalkylenoxyde sind in einigen Fällen den nicht veresterten bzw. nicht veretherten, aminischen Polyalkylenoxyden vorzuziehen, da freie Hydroxygruppen mit einigen Bindemitteln in unerwünschter Art und Weise reagieren und so die Lagerstabilität der Systeme herabsetzen.

Eine bevorzugte Ausführungsform der veresterten, aminischen Polyalkylenoxyde sind Modifikationen, die eine polymerisierbare Einheit tragen, wie sie z. B. bei der Veresterung mit Acrylsäure oder Methacrylsäure, oder bei der Umesterung mit Alkyl(meth)acrylaten entsteht. Eine solche Veresterung kann unter besonders schonenden Verfahrensbedingungen und daher besonders bevorzugt, durch eine enzymatisch katalysierte Veresterung durchgeführt werden. Eine weitere bevorzugte Ausführungsform der veresterten, aminischen Polyalkylenoxyde sind Modifikationen die in bestimmte Lacksysteme bei der Aushärtung eingebaut werden können. Solche Modifikationen, die z. B. in Alkydlacke einbaut werden können, entstehen z. B. bei der Veresterung mit (mehrfach) ungesättigten (kojugierten) Carbonsäuren wie z. B. Ölsäure, Linolsäure, Linolensäure.

Ein weitere Variante für die Modifizierung, der bei der Alkoxylierung entstandenen Hydroxygruppe, ist die Umsetzung mit Hydroxycarbonsäuren und/oder cyclischen Lactonen unter Ausbildung von (Poly)Estern. Die Umsetzung erfolgt in dem Fachmann bekannter Weise. Durch das gleichzeitige Vorhandensein der Aminogruppe kommt es in vielen Fällen zu einer deutlichen Abnahme der Reaktionsgeschwindigkeit gegenüber Produkten ohne Aminofunktionen, welches nur teilweise durch eine Erhöhung der Katalysatormenge ausgeglichen werden kann. Eine bevorzugte Ausführungsform der oben genannten (Poly)-Ester der aminischen Polyalkylenoxyde sind Produkte auf der Basis von cyclischen Lactonen wie z. B. ä-Caprolacton und/oder δ-Valerolacton als Edukte. Bei dieser Umsetzung bleiben die endstandigen OH-Gruppen erhalten. Solche Produkte zeichnen sich durch eine besonders breite Verträglichkeit in vielen Lacksystemen aus.

Die bei der Alkoxylierung oder Polyveresterung entstandenen Hydroxygruppen können gemäß c) auch mit Isocyanaten zu Urethanen umgesetzt werden. Die Urethanbildung wird in dem Fachmann bekannter Art und Weise durchgeführt. Auf Grund der tertiären Aminofunktion, muss in den meisten Fällen nicht katalysiert werden. Die Umwandlung der Hydroxygruppe in eine Urethangruppe ist, wie bei der Veresterung oder Veretherung, dann angezeigt, wenn Hydroxygruppen im Lacksystem stören. Außerdem wirkt sich die Urethanbildung oft günstig auf die schaumdämpfende Wirkung der Netz- und Dispergiermittel aus. Die Unterdrückung der Schaumneigung stellt vor allem bei Anreibungen im wässrigen Formulierungen eine wertvolle Zusatzfunktion solcher Netz- und Dispergiermittel dar.

Wie unter f) ausgeführt wurde, kann auch die quaternisierte Form der aminischen Polyalkylenoxyde eingesetzt werden. Die Quaternisierung erfolgt in dem Fachmann bekannter Weise z. B. mit Alkyl- oder Aralkylhalogeniden mit Halogencarbonsäureestern oder mit Epoxyden. Eine solche Ausführungsform ist z.B. dann zu bevorzugen, wenn Aminogruppen in dem Bindemittelsystem stören, in welches die Pigmentkonzentrate eingearbeitet werden. Eine besonders bevorzugte Ausführungsform der quaternisierten aminischen Polyalkylenoxyde stellen alkoxylierte Umsetzungsprodukte von Polyepoxyden mit primären und sekundären Aminen die einer weitere tertiäre Aminogruppe tragen, wie z. B. Dimethylaminopropylamin, dar, die nachfolgend quaternisiert werden.

Der Einsatz der erfindungsgemäßen Dispergiermittel kann gemäß dem Stand der Technik für bekannte Dispergiermittel erfolgen. Die Dispergiermittel können alleine oder zusammen mit Bindemitteln eingesetzt werden. Beim Einsatz in Polyolefinen kann es z.B. vorteilhaft sein, entsprechende niedermolekulare Polyolefine als Trägermaterialien zusammen mit dem Dispergiermittel einzusetzen.

Der Einsatz der erfindungsgemäßen Produkte als Netz- und Dispergiermittel für Pigmentpräperationen im Bereich der Herstellung von sogenannten Color-Resists (Bestandteile von Farb-Flüssigkristall-Bildschirmen), von Pigmentpräparation für anodische und bevorzugt kathodische Tauchlackierungen und die Anwendung in Ink-Jet Tinten stellen drei besonders bevorzugte Anwendungsfelder dar.

Neben dem Einsatz der erfindungsgemäßen Reaktionsprodukte als Dispergiermittel und als Dispersionsstabilisatoren ist auch die Beschichtung von pulver- oder faserförmigen Feststoffen mit den erfindungsgemäßen Produkten Gegenstand dieser Erfindung. Derartige Beschichtungen von organischen wie auch anorganischen Feststoffen werden in bekannter Weise ausgeführt, wie sie z.B. in EP-A-0 270 126 beschrieben werden. Hierbei kann das Lösungs- oder Emulsionsmittel entweder entfernt werden oder im Gemisch unter Bildung von Pasten verbleiben. Diese Pasten sind übliche Handelsprodukte und können zusätzlich Bindemittelanteile sowie weitere Hilfs- und Zusatzstoffe enthalten. Speziell bei Pigmenten kann die Beschichtung der Pigmentoberfläche während oder nach der Synthese der Pigmente erfolgen z.B. durch Zusatz der erfindungsgemäßen Produkte zur Pigmentsuspension oder während oder nach dem Pigmentfinish.

Die auf diese Weise vorbehandelten Pigmente zeichnen sich durch leichtere Einarbeitbarkeit im Bindemittel, sowie durch verbessertes Viskositäts-, Flockulations- und Glanzverhalten gegenüber nicht behandelten Pigmenten aus.

Neben der oben beschriebenen Anwendung als Beschichtungsmittel für pulver- und faserförmige Feststoffe können die erfindungsgemäßen Dispergiermittel auch als Viskositätsreduzierer und Kompatibilisatoren in Kunstharzen eingesetzt werden. Beispiel für solche Kunstharze sind die sogenannten "sheet molding compounds" (SMC) und "bulk molding compounds" (BMC), die aus stark füllstoff- und faserhaltigen ungesättigten Polyesterharzen bestehen. Um eine hohe Steifigkeit, eine gute Oberflächenqualität und flammhemmende Eigenschaften (bei Füllstoffen wie z.B. Al(OH)₃ oder Mg(OH)₂) zu erhalten, ist es notwendig diese Systeme hoch mit Füllstoffen und Fasern zu füllen, was zu einem starken Viskositätsanstieg der SMC und BMC-Mischungen und zu Problemen bei der Benetzung der Fasern führt. Ein weiteres Problem bei SMC- und BMC-Kunstharzmischungen besteht darin, dass oftmals Polystyrol (PS) der Formulierung zugesetzt wird, um die Schrumpfung während des Verarbeitungsprozesses zu reduzieren. PS ist nicht verträglich mit den verwendeten ungesättigten Polyesterharzen und es kommt zur Separation der Komponenten. Durch den Einsatz der erfindungsgemäßen Produkte ist es möglich die Viskosität der Harz/Füllstoff-Gemische stark zu senken, so dass ein höherer Füllgrad möglich ist, der sowohl die mechanischen Eigenschaften, die Oberflächenbeschaffenheit und bei Verwendung von Al(OH)₃ oder Mg(OH)₂ die flammhemmende Wirkung positiv beeinflusst. Bei Verwendung von PS-gefüllten SMC- oder BMC-Mischungen können die erfindungsgemäßen Additive aufgrund ihrer guten Dispergierqualitäten eine Kompatibilisierung zwischen PS und ungesättigtem Polyesterharz herbeiführen, wodurch sich die Lagerstabilität und Verarbeitungssicherheit solcher Mischungen erhöht.

Die erfindungsgemäßen Dispergiermittel werden bevorzugt in einer Menge von 0,5 bis 100 Gew. %, bezogen auf den zu dispergierenden Feststoff, eingesetzt. Zur Dispergierung spezieller Feststoffe können aber durchaus wesentlich höhere Mengen der Dispergiermittel notwendig sein.

Die Menge an Dispergiermittel ist im wesentlichen abhängig von Art und Größe der zu belegenden Oberfläche des zu dispergierenden Feststoffes. Ruß benötigt z.B. wesentlich größere Mengen an Dispergiermittel als z.B. TiO₂. Beispiele für Pigmente oder Füllstoffe finden sich in EP-A-0 270 126. Weitere Beispiele sind Neuentwicklungen besonders im Bereich der organischen Pigmente wie z.B. die Klasse der Diketo-pyrrolo-pyrrole, aber auch magnetische Pigmente z.B. auf Basis von Reineisen oder Mischoxyden. Des weiteren lassen sich auch mineralische Füllstoffe, z.B. Calciumcarbonat, Calciumoxyd aber auch Flammschutzmittel wie z.B. Aluminium- oder Magnesiumhydroxyd dispergieren. Mattierungsmittel wie z.B. Kieselsäuren lassen sich ebenfalls dispergieren und stabilisieren. Ein weiteres besonders geeignetes Einsatzfeld der erfindungsgemäßen Dispergiermittel ist die Dispergierung von Nanopartikeln z. B. aus SiO₂, Al₂O₃, ZnO, da sich die erfindungsgemäßen Dispergiermittel bei dieser Anwendung durch eine gewünschte starke Reduktion der Viskosität bei der Anreibung der Nanopartikel auszeichnen.

### Beispiele

Die Erfindung wird durch die nachfolgenden Beispiele zusätzlich erläutert. Wenn nicht anders angegeben handelt es sich bei Teilen um Gewichtsteile, bei Prozenten um Gewichtsprozente. Bei molekular uneinheitlichen Substanzen stellen die angegebenen Molekulargewichte Durchschnittswerte des Zahlenmittels dar. Bei der Reaktion der Amine mit den (Poly)-Epoxyden wird die Stöchiometrie der Reaktion so gewählt, dass auf eine Epoxygruppe eine reaktive Aminogruppe (z. B. bei Dimethylaminopropylamin nur die primäre Aminogruppe) eingesetzt wird. Die bei der Alkoxylierung eingesetzten Mole Alkoxylierungsmittel beziehen sich immer auf das gesamte zu alkoxylierende Molekül. Folgernde Abkürzungen für die unterschiedlichen Alkoxylierungsmittel wurden gewählt:
Ethylenoxyd: EO
Propylenoxyd: PO
Butylenoxyd: BO
Decenoxyd: DO
Styroloxyd: SO

EO-28; PO-49 im dritten Beispiel bedeutet, dass mit dem Addukt aus Diethanolamin und D.E.R. 331 28 Mol Etylenoxyd und 49 Mol Propylenoxyd reagiert haben.

Der Begriff Alkoxylierungsvariante bezeichnet ob die Alkoxylierung mit unterschiedlichen Alkoxylierungsmitteln sequenziell unter Ausbildung von Blockstrukturen oder als sogenannte Mischbegasung unter Ausbildung von ungeordneten Strukturen, sogenannte Random-Strukturen (abgekürzt random), durchgeführt wird. Bei den Blockstrukturen gibt die Reihenfolge der aufgeführten Alkoxylierungsmittel die Reihenfolge der verschiedenen Blöcke ausgehend vom Amin-(Poly)-Epoxyaddukt an. So bedeutet z. B. in Beispiel 18 EO-block-PO, dass auf das Addukt aus Dibutylamin und D.E.R. 331 zuerst der EO-Block aufpolymerisiert ist und dann, auf den fertigen EO-Block nachfolgend der PO-Block aufpolymerisiert ist.

**Tabelle 1 Beispiele für nicht modifizierte aminische Polyalkylenoxyde**

| Beispiel Nr. | Verwendetes Amin | Verwendetes Epoxyd | Verwendetes Alkoxylierungsmittel | Alkoxylierungvariante |
|---|---|---|---|---|
| 1 | Diethanolamin (2,2'-Iminodiethanol) | D.E.R. 331*¹ | EO-25 | random |
| 2 | Diethanolamin | D.E.R.331 | PO-25 | random |
| 3 | Diethanolamin | D.E.R. 331 | EO-28; PO-49 | random |
| 4 | Diethanolamin | D.E.R. 331 | EO-5; PO-65 | random |
| 5 | Ethylethanolamin (2-Ethylaminoethanol) | D.E.R. 331 | EO-112; PO-85 | random |
| 6 | Ethylethanolamin | D.E.R. 331 | EO-68; PO-119 | random |
| 7 | Di-n-butylamin | D.E.R. 331 | EO-28; PO-49; BO-28 | random |
| 8 | Di-n-butylamin | D.E.R. 331 | EO-28; PO-49; SO-1 | random |
| 9 | Di-n-butylamin | D.E.R. 331 | EO-49; PO-38 | random |
| 10 | Di-n-butylamin | D.E.R. 331 | EO-28; PO-49 | random |
| 11 | Di-n-butylamin | D.E.R. 331 | EO-5; PO-65 | random |
| 12 | Oleylamin (9-Octadecen-1-amine) | D.E.R. 331 | EO-54; PO-97 | random |
| 13 | Anilin | D.E.R. 331 | EO-54; PO-97 | random |
| 14 | Dimethylaminopropylamin (1,3-Propanediamine, N,N-dimethyl-) | D.E.R. 331 | EO-54; PO-97 | random |
| 15 | Aminopropylimidazol (1H-Imidazol-1-propylamin) | D.E.R. 331 | EO-54; PO-97 | random |
| 16 | Pyrrolidin | D.E.R. 331 | EO-5; PO-10 | random |
| 17 | Cyclohexylamin | D.E.R. 331 | EO-28; PO-49 | random |
| 18 | Dibutylamin | D.E.N. 431*² | EO-49; PO-86 | random |
| 19 | Ethylethanolamin | Styroloxyd | EO-10; PO-5 | random |
| 20 | Ethylethanolamin | Grillonit RV 1418*³ | EO-10; PO-5 | random |
| 21 | Di-n-butylamin | Epikote 1001*⁴ | EO-5; PO-10 | random |
| 22 | Di-n-butylamin | D.E.R. 331 | EO-28; PO-49 | EO-block-PO |
| 23 | Di-n-butylamin | D.E.R. 331 | EO-28; PO-49 | PO-block-EO |
| 24 | Di-n-butylamin | D.E.R. 331 | EO-49; PO-38 | EO-block-PO |
| 25 | Di-n-butylamin | D.E.R. 331 | EO-38; PO-49 | PO-block-EO |
| *¹ D.E.R. 331 ist ein Handelsprodukt der Dow Deutschland Inc.. Es handelt sich um ein niedermolekulares, flüssiges Epoxydharz auf Bisphenol A-Basis. | | | | |
| *² D.E.N. 431 ist ein Handelsprodukt der Dow Deutschland Inc.. Es handelt sich um einen flüssigen Epoxy Novolak. | | | | |
| *³ Grilonit RV 1814 ist ein Handelsprodukt der Fa. Ems Primid. Es handelt sich um einen C13/C15-Alkylglycidylether. | | | | |
| *⁴ Epikote 1001 ist ein Handelsprodukt der Shell AG. Es handel sich um ein höhermolekulares, festes Epoxydharz auf Bisphenol A-Basis. | | | | |

**Tabelle 2 Übersichtstabelle mit Beispielen für modifizierte, aminische Polyalkylenoxyde, die nachfolgend näher erläutert werden:**

| Beispiel Nr. | Ausgangsprodukt für die Modifizierung | Art der Modifizierung |
|---|---|---|
| 26 | Beispiel 9 | Versalzung mit Phosphorsäure |
| 27 | Beispiel 11 | Versalzung mit unpolarem Polyphosphorsäureester |
| 28 | Beispiel 18 | Versalzung mit polarem Polyphosphorsäureester |
| 29 | Beispiel 5 | Versalzung mit Zitronensäure |
| 30 | Beispiel 10 | Phosphorylierung der OH-Gruppe |
| 31 | Beispiel 11 | Veresterung mit Fettsäure |
| 32 | Beispiel 10 | Polyveresterung mit ε-Caprolacton |
| 33 | Beispiel 11 | Quaternisierung mit CH₃I |
| 34 | Beispiel 14 | Quaternisierung mit Benzylchlorid |
| 35 | Beispiel 11 | Umsetzung mit Stearylisocyanat |

### Beispiel 26:

100 Teile des Reaktionsproduktes aus Beispiel 22, welches eine Aminzahl (AZ) von 22,8 mg KOH/g hat, werden mit 5,9Teilen 85%iger Phosphorsäure, gemessene Säurezahl (SZ) 973 mg KOH/g, versalzt. Man erhält ein klares, gelbes Reaktionsprodukt. Der Versalzungsgrad in diesem Beispiel beträgt 2,5.

### Beispiel 27:

85 Teile des Reaktionsproduktes aus Beispiel 11, welches eine AZ von 21,9 mg KOH/g hat, werden unter intensivem Rühren bei 50°C mit 15,1 Teilen eines Phosphorsäuremonoesters (HO)₂PO(OR¹) mit R¹ = Butoxypoly(ethylenglycol-copropylenglycol) (Mₙ: 1000 g/mol, Ethylenglycol/Propylenglycol-Verhältnis ~1:1, SZ~ 98,7 mg KOH/g; im Folgenden als Phosphorsäureester A bezeichnet) versalzt. Man erhält ein klares, viskoses, braunes Produkt. Der Versalzungsgrad hat in diesem Beispiel den Wert 0,8.

### Beispiel 28:

75 Teile des Reaktionsproduktes aus Beispiel 18, welches eine AZ von 19,1 mg KOH/g hat, werden unter intensivem Rühren bei 50°C mit 16,6 Teilen des Phosphorsäureesters A versalzt. Man erhält ein klares, viskoses, braunes Produkt. Der Versalzungsgrad hat in diesem Beispiel den Wert 0,8.

### Beispiel 29:

150 Teile des Reaktionsproduktes aus Beispiel 5, welches eine AZ von 10,1 mg KOH/g hat, werden bei 50°C mit 0,52 Teilen Zitronensäure versalzt. Man erhält ein klares, viskoses, gelbes Produkt. Der Versalzungsgrad hat in diesem Beispiel den Wert 0,3.

### Beispiel 30:

100 Teile des Reaktionsproduktes aus Beispiel 10 werden unter intensivem Rühren bei 60°C über einen Zeitraum von 5 Minuten mit 9,5 Teilen Polyphosphorsäure versetzt. Hierbei ist ein starker Anstieg der Viskosität zu beobachten. Die Temperatur wird auf 80°C erhöht und innerhalb von 5 Stunden steigt die Säurezahl von einem Anfangswert von 88,7 mg KOH/g auf einen Endwert von 100,4 mg KOH/g. Das Reaktionsprodukt ist nach dem Abkühlen eine hochviskose, gelbe, klare Flüssigkeit.

### Beispiel 31:

150 Teile des Epoxyd-Amin-Adduktes aus Beispiel 11 werden mit 37,4 Teilen Tallölfettsäure (gemessene Säurezahl 193 mg KOH/g) gemischt. Bei diesem Mischungsverhältnis wird die Tallölfettsäure ungefähr im doppelt molaren Überschuss, bezüglich der zu veresternden Hydroxygruppen, eingesetzt. Die Mischung wird mit 1 Teil Paratoluolsulfonsäure als Katalysator gemischt und unter Rühren auf 180°C erhitzt. Durch einen leichten Stickstoffstrom wird entstehendes Reaktionswasser aus der Reaktionsmischung entfernt. Nach ca. 3,5 h unter diesen Reaktionsbedingungen wurde die Reaktionstemperatur auf 200°C erhöht. Nach weiteren 7,5 Sunden ist die Aminzahl der Reaktionslösung auf einen Wert von 27,1 mg KOH/g gefallen. Somit wurden etwas mehr als 50% aller Hydroxygruppen mit der Tallölfettsäure verestert. Man erhält ein gelbbraunes, klares Produkt.

### Beispiel 32:

150 Teile des Reaktionsproduktes aus Beispiel 10 mit einer Hydroxylzahl (OHZ) von 31,7 mg KOH/g werden mit 96,7 Teilen s-Caprolacton und 200 ppm Dibutylzinndilaurat (DBTL) gemischt. In einer N₂-Atmosphäre werden die Komponenten unter Rühren auf 160°C erhitzt. Nach 6 h und 12 h Reaktionszeit werden jeweils weitere 100 ppm DBTL nachdosiert. Innerhalb von ca. 15 h Gesamtreaktionszeit ist der Festkörpergehalt der Reaktionslösung auf > 98% angestiegen. Nach dem Abkühlen liegt der Polyester als braunes teilkristallines Reaktionsprodukt vor, das, vor der weiteren Verwendung, in geeigneten Lösemitteln angelöst werden kann.

### Beispiel 33:

100 Teile des Reaktionsproduktes aus Beispiel 9 mit einer AZ von 21,9 werden mit 5 Teilen Methyliodid (90 Mol% bezogen auf die zu alkylierenden Stickstoffatome) gemischt und unter N2-Atmosphäre bei 30°C 12 h gerührt. Innerhalb dieser Zeit ist die AZ auf einen Wert von 2,2 gesunken, was nahezu der theoretischen Vorgabe entspricht. Weiterhin ist die Viskosität der Reaktionslösung deutlich angestiegen. Man erhält eine gelbes, viskoses Reaktionsprodukt.

### Beispiel 34:

150 Teile des Reaktionsproduktes aus Beispiel 14 mit einer Aminzahl von 10,1 mg KOH/g werden mit 3,08 Teilen Benzylchlorid gemischt. Das molare Verhältnis zwischen Reaktionsprodukt aus Beispiel 14 und Benzylchlorid wurde so gewählt, dass ca. 90 % der Dimethylaminoalkylgruppen alkyliert werden. Nach 3 Stunden Reaktionszeit bei 120°C in einer N₂-Atmosphäre ist die Aminzahl auf einen Wert von 11,2 mg KOH/g gefallen, welches ungefähr der theoretischen Vorgabe entspricht. In Vorversuchen konnte gezeigt werden, dass unter diesen Reaktionsbedingungen und mit diesem Alkylierungsreagenz nahezu ausschließlich die Dimethylaminoalkylgruppen alkyliert werden. Man erhält ein klares, gelb-oranges, viskoses Reaktionsprodukt.

### Beispiel 35:

175 Teile des Reaktionsproduktes aus Beispiel 11 mit einer OHZ von 24,1 werden mit 21,4 Teilen Stearylisocyanat gemischt und unter N2-Atmosphäre auf 80°C erhitzt. Dies entspricht einem 0,857 molaren Unterschuss an Isocyanatgruppen in Bezug auf die OH-Gruppen des aminischen Polyalkylenoxyds. Der Isocyanatgehalt wurde unmittelbar vor der Reaktion bestimmt. Nach ca. 3 h Reaktionszeit ist der Gehalt an Isocyanatgruppen auf < 0,01% gesunken und die Reaktion damit beendet. Man erhält ein weißes teilweise auskristallisierendes Reaktionsprodukt.

### Anwendungstechnische Beispiele

Zur Prüfung der Wirksamkeit der erfindungsgemäßen Dispergiermittel wurden Pigmentpasten mit verschiedenen modifizierten und nicht modifizierten aminischen Polyalkylenoxyden hergestellt. Parallel dazu wurden auch Pigmentpasten mit kommerziell erhältlichen, nicht erfindungsgemäßen aminischen Polyalkylenoxyden hergestellt, da diese Produkte chemisch den erfindungsgemäßen Stoffen am ähnlichsten sind, kommerziell verfügbar sind und somit den Stand der Technik im Bereich der aminischen Polyalkylenoxyde repräsentieren. Es wurden sowohl wasserbasierte Pigmentpasten hergestellt, als auch lösungsmittelhaltige Pigmentpasten für den Einsatz in lösungsmittelhaltigen Bindemittelsystemen.
Die so erhaltenden Pigmentpasten wurden anwendungstechnisch untersucht, indem diese in Bindemittelsysteme eingearbeitet wurden. Nach Applikation und Aushärtung der fertigen Pigmentlacke wurden dann Farbstärkemessungen an den Aufzügen vorgenommen. Außerdem wurden Viskositätsmessungen an den Pigmentpasten vorgenommen.

**Tabelle 3 Rezeptur der wasserbasierten Pigmentpasten (Buntpasten):**

| | Bayferrox 130 M *¹ | Heliogenblau L 7101 F *² |
|---|---|---|
| Wasser | 32,4 | 56,9 |
| N+D - Additiv | 6,0 | 12,0 |
| Byk 024 *³ | 1,0 | 1,0 |
| Ebotec BT 20*⁴ | 0,1 | 0,1 |
| Pigment | 60,0 | 30,0 |
| ByK 420 *⁵ | 0,5 | - |
| | 100,0 | 100,0 |

| | | |
|---|---|---|
| *¹ Bayferox 130 M ist ein anorganisches Rotpigment der Fa. Bayer AG | | |
| *² Heliogenblau L 7101 F M ist ein organisches Blaupigment der Fa. BASF AG | | |
| *³ Byk 024 ist ein silikonhaltiger Entschäumer der Fa. BYK Chemie GmbH | | |
| *⁴ Ebotec BT 20 ist ein Konservierungsmittel der Fa. Bode Chemie Hamburg | | |
| *⁵ Byk 420 ist ein Rheologieadditiv der Fa. BYK Chemie GmbH. | | |

100 Teile der oben angegebenen Mischung werden mit 100 Teilen Glasperlen (1 mm Durchmesser) versetzt und mittels einer Polypropylenscheibe von 40 mm Durchmesser, bei einer Umfangsgeschwindigkeit von 18 m/s bei Bayferox 130 M und 23 m/s bei Heliogenblau 7101F, bei 40°C, 40 min in einer vertikalen Perlmühle der Fa. Getzmann (Dispermat CV) dispergiert. Weiterhin wurde unter ähnlichen Bedingungen (Umfangsgeschwindigkeit 18 m/s, Dispergierzeit 30 min) eine Weißpaste mit einem handelsüblichen Netz- und Dispergiermittel hergestellt.

**Tabelle 4 Rezeptur der Weißpaste**

| | |
|---|---|
| Wasser | 24,9 |
| Disperbyk 190 *² | 3,5 |
| Byk 024 | 1,0 |
| Ebotec BT 20 | 0,1 |
| Kronos 2160*¹ | 70,0 |
| ByK 420 | 0,5 |
| | 100,0 |

| | |
|---|---|
| *¹ Kronos 2160 ist ein Titandioxydpigment der Fa. Kronos Inc. | |
| *² Disperbyk 190 ist ein Netz- und Dispergiermittel der Fa. BYK-Chemie | |

Zur Prüfung der Dispergierqualität werden die Buntpasten und die Weißpaste 5 min in einem Skandex Rüttlers mit einem handelsüblichen Klarlack gemäß folgender Rezeptur vermischt.

**Tabelle 5 Rezeptur der Weißabmischungen**

| Anteile der Komponenten | Bayferrox 130 M | Heliogenblau L 7101 F |
|---|---|---|
| Klarlack | 8,8 | 8,8 |
| Weißpaste | 3,8 | 3,8 |
| Buntpaste | 0,9 | 0,4 |
| | 13,5 | 13,0 |

Der handelsüblich Klarlack wurde gemäß folgender Rezeptur auf Basis von Joncryl SCX 8280 hergestellt.

**Tabelle 6 Rezeptur des Klarlacks auf Basis von Joncryl SCX 8280**

| | |
|---|---|
| Joncryl SCX 8280 *¹ | 87,7 |
| Butoxyethanol | 3,2 |
| Texanol *² | 1,3 |
| Rheolate 278 *³ | 1,3 |
| Ammoniak 32%ig | 0,4 |
| Wasser | 5,0 |
| Byk 024 *⁴ | 0,7 |
| Byk 346 ⁵ | 0,3 |
| | 100,0 |

| | |
|---|---|
| *¹ Joncryl SCX 8280 ist eine Acryldispersion der Fa. Johnson Polymers Ltd. | |
| *² Texanol ist ein hochsiedender Esteralkohol der Fa. Eastman Chemical Company | |
| *³ Rheolate 278 ist ein PU-Verdicker der Fa. Elementis | |
| *⁴ Byk 024 ist ein silikonhaltiger Entschäumer der Fa. BYK Chemie GmbH | |
| *⁵ Byk 346 ist ein Silikontensid zur Verbesserung der Untergrundbenetzung der Fa. BYK Chemie GmbH. | |

Die fertigen Lacke werden dann in einer Nassfilmdicke von 100 µm, auf Kontrastkarten (Nr. 2853) der Fa. BYK-Gardner, mit einer Kastenrakel appliziert.

Nach der Trocknung der Lacke bei Raumtemperatur wird der Glanz, bei einem Beobachtungswinkel von 60°, bzw. der Haze der Beschichtungen mit Hilfe eines Gloss-Haze Messgerätes der Fa. Byk-Gardner gemessen. Die Pigmentstabilisierung der Weißabmischung wird anhand des bei einem "Rub-out" (Verreiben des applizierten Lackes kurz vor dem Trocknen des Auftrags) entstehenden Farbtonunterschieds zum nicht verriebenen Lack gemessen. Die Bestimmung diese

Farbtonunterschieds (Δ E-Wert) erfolgt mit einem Farbmessgerätes der Fa. BYK-Gardner (Colour Guide, Sphere, Beobachtungswinkel 10°). Je kleiner der Δ E-Wert, desto besser die Stabilisierung der Abmischung.

**Tabelle 7 Ergebnisse der Glanz- und Glanzschleiermessungen (Haze) mit Heliogenblau 7101 F**

| Produkt aus | Glanzgrad | Haze | Ä E |
|---|---|---|---|
| Beispiel 5 | 81 | 154 | 0,25 |
| Beispiel 18 | 69 | 265 | 1,50 |
| Beispiel 23 | 82 | 87 | 1,00 |
| Beispiel 24 | 84 | 75 | 0,70 |
| Beispiel 25 | 80 | 131 | 0,40 |
| Beispiel 26 | 78 | 154 | 0,74 |
| Tetronic RED 9040 *¹ | * | * | * |

| | | | |
|---|---|---|---|
| *¹ Um den Stand der Technik aufzuzeigen wurden entsprechend den obigen Bedingungen eine Anreibung und anwendungstechnische Prüfung mit Tetronic RED 9040 als Netz- und Dispergiermittel durchgeführt. Bei Tetronic RED 9040, einem Produkt der BASF AG, handelt es sich um ein EO/PO-Blockpolymerisat auf Basis von Ethylendiamin mit einem Molekulargewicht von ca. 7200 g/mol. | | | |
| * In diesem Fall war keine Glanz- und Hazemessung möglich, da die Pigmentpaste mit Tetronic RED 9040 sehr stark agglomeriert vorlag. | | | |

**Tabelle 8 Ergebnisse der Glanz und Hazemessungen mit Bayferrox 130 M**

| Produkt aus | Glanzgrad | Haze | Ä E |
|---|---|---|---|
| Beispiel 5 | 83 | 89 | 1,10 |
| Beispiel 18 | 84 | 82 | 1,70 |
| Beispiel 23 | 83 | 82 | 1,00 |
| Beispiel 24 | 83 | 93 | 2,80 |
| Beispiel 25 | 83 | 93 | 0,90 |
| Beispiel 26 | 82 | 114 | 2,60 |
| Tetronic RED 9040 | 78 | 206 | 6,80 |

Wie aus Tabelle 7 und 8 zu entnehmen ist, führen einzig die Pigmentlacke, die mit den erfindungsgemäßen Produkten hergestellt wurden, zu Beschichtungen mit hohem Glanz, geringem Haze und akzeptablem Δ E-Werten. Ein ähnliches Bild ergibt sich für Pigmentlacke, die mit anderen erfindungsgemäßen Dispergiermitteln, sowie mit anderen Pigmenten hergestellt wurden.

Mit dem nicht erfindungsgemäßen Produkt konnte im Fall des Heliogenblau 7101 F keine akzeptable Dispergierung vorgenommen werden. Bei der Anreibung des Bayferrox 130M zeigte das nicht erfindungsgemäße Produkt bei schlechteren Glanz- und Haze-Werten vor allem Schwächen im Δ E-Wert.

Um die Stärken der erfindungsgemäßen Produkte bezüglich der Breite der Anwendung zu demonstrieren, wurden diese auch in einem lösungsmittelbasierten Bindemittelsystem als Netz- und Dispergiermittel eingesetzt.

**Tabelle 9 Rezeptur der lösungsmittelhaltigen, bindemittelfreien Pigmentpasten**

| Rezeptur für: | 100%ige Additive | 52 %ige Additive |
|---|---|---|
| Propylenglycolmonomethyletheracetat | 59,6 | 51,5 |
| Bernsteinsäuredimethylester | 6,6 | 6,6 |
| Additiv | 8,8 | 16,9 |
| Spezialschwarz 4 *¹ | 25 | 25 |
| | 100 | 100 |

| | | |
|---|---|---|
| *¹ Spezialschwarz 4 ist ein Rußpigment der Fa. Degussa AG | | |

100 Teile der oben angegebenen Mischung werden mit 100 Teilen Glasperlen (1 mm Durchmesser) versetzt und mittels einer Polypropylenscheibe von 40 mm Durchmesser bei einer Umfangsgeschwindigkeit von 23 m/s bei 40°C 60 min in einer vertikalen Perlmühle der Fa Getzmann (Dispermat CV) dispergiert. Die so erhaltenen Pasten wurden nach dem Absieben der Glasperlen einer Viskositätsmessung unterzogen. Hierzu wurde ein Stresstech Rheometer der Fa. Rheologica verwendet. Es wurde in Kegel-Platte-Geometrie mit 25 mm Plattendurchmesser und einem Kegelwinkel von 1° bei 23°C und verschiedenen Schergeschwindigkeiten gemessen.

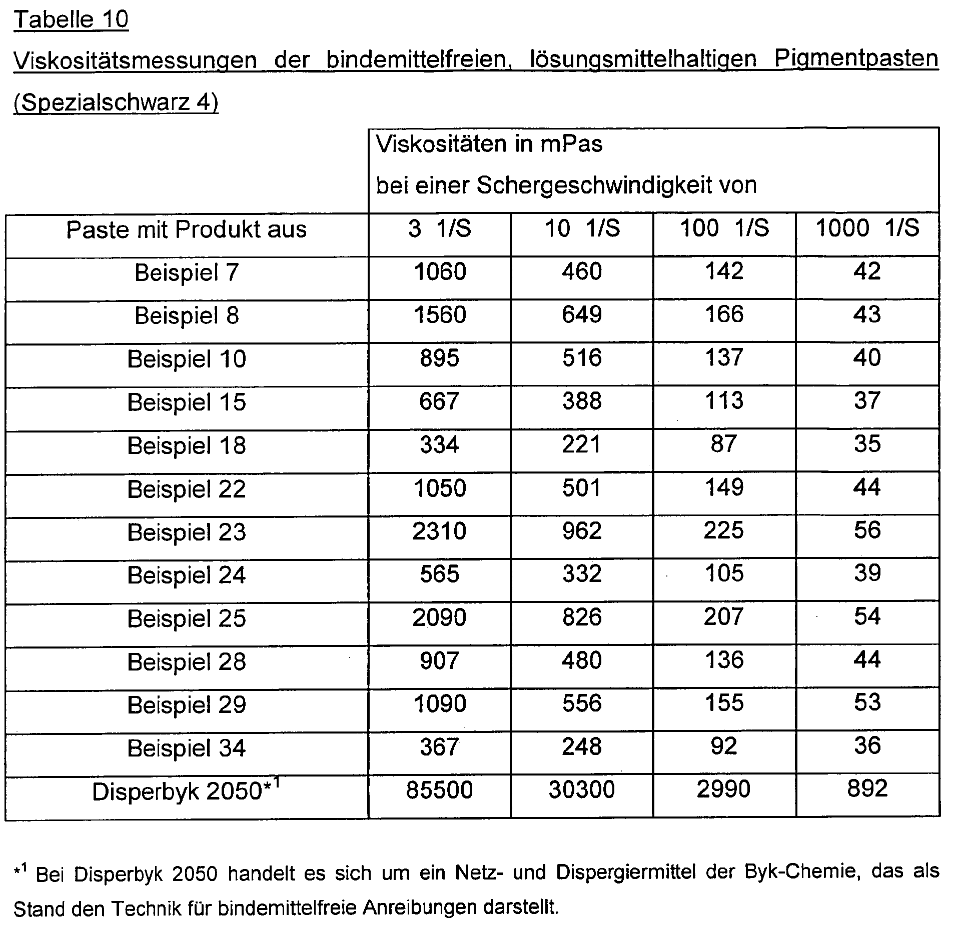

Zur Prüfung der Dispergierqualität werden jeweils 2,4 Teile der Buntpasten 5 min in einem Skandex Rüttler mit einem handelsüblichen lösungsmittelhaltigen Alkydharz gemäß folgender Rezeptur vermischt.

**Tabelle 11 Rezeptur des Alkyd-Melamin-Einbrennlackes auf Basis von Vialkyd AC 451**

| | |
|---|---|
| Vialkyd AC 451*¹ | 63,5 |
| Maprenal MF 800, 70 %ig *² | 20,2 |
| Butanol | 2,0 |
| Solvent Naphtha | 13,8 |
| Byk 310 *³ | 0,2 |
| Byk 066 *⁴ | 0,3 |
| | 100,0 |

| | |
|---|---|
| *¹ Vialkyd AC 451 ist ein Alkydharz der Fa. Vianova | |
| *² Maprenal MF 800 ist ein Melaminharz der Fa. Solutia | |
| *³ Byk 310 ist ein Verlaufsadditiv der Fa. BYK Chemie GmbH | |
| *⁴ Byk 066 ist ein silikonhaltiger Entschäumer der Fa. BYK Chemie GmbH | |

Vor der Applikation wird der Lack mit Xylol auf eine Auslaufzeit von 25 s in einem DIN 4 Meßbecher eingestellt. Der so eingestellte Lack wird dann auf Polyesterfolie aufgegossen, 10 min bei Raumtemperatur getrocknet und 30 min bei 140°C in einem Lacktrockenschrank eingebrannt. Als Standart wurde in diesem Fall Disperbyk 2050 eingesetzt, ein Acrylatcopolymer mit pigmentaffinen Gruppen, speziell entwickelt als Netz- und Dispergiermittel für bindemittelfreie, lösungsmittelhaltige Pigmentkonzentrate.

**Tabelle 12 Ergebnisse der Glanz und Hazemessunqen mit dem Pigment Spezialschwarz 4**

| Produkt aus | Glanzgrad | Haze |
|---|---|---|
| Beispiel 7 | 85 | 10 |
| Beispiel 8 | 86 | 9 |
| Beispiel 10 | 87 | 8 |
| Beispiel 15 | 86 | 10 |
| Beispiel 18 | 86 | 9 |
| Beispiel 22 | 87 | 8 |
| Beispiel 23 | 87 | 9 |
| Beispiel 24 | 87 | 8 |
| Beispiel 25 | 85 | 9 |
| Beispiel 28 | 87 | 9 |
| Beispiel 29 | 86 | 11 |
| Beispiel 34 | 87 | 8 |
| Disperbyk 2050 | 84 | 30 |

Alle erfindungsgemäße Produkte zeigen sehr gute Glanz- und Hazewerte. Auch der mit der Paste mit Disperbyk 2050 hergestellt Lack zeigt einen guten Glanzwert aber einen relativ hohen Hazewert. Bei den Pastenviskositäten (Tabelle 10) kann man allerdings große Unterschiede erkennen. Alle Pasten mit den erfindungsgemäßen Produkten zeigen außerordentlich niedrige Viskositäten gegenüber dem industriellen Standart Disperbyk 2090 und lassen aus diesem Grund einen wesentlich höheren Pigmentfüllgrad bei der Anreibung zu. Ein ähnliches Bild ergibt sich für Pigmentlacke, die mit anderen erfindungsgemäßen Dispergiermitteln, sowie mit anderen Pigmenten hergestellt wurden.

Somit ist die Aufgabe der vorliegenden Erfindung erfüllt, bei guter Stabilisierung der Pigmente die Mahlgutviskosität der Pasten so weit senken, dass eine Verarbeitung bei hohem Füllgrad möglich ist. Außerdem konnte auch durch den Einsatz der erfindungsgemäßen alkoxylierten Epoxyd-Amin-Addukte sowohl in wässrigen, als auch in lösungsmittelhaltigen Formulierungen, die besonders breite Verträglichkeit der Produkte demonstriert werden.

Ein weiteres Einsatzgebiet der erfindungsgemäßen Produkte ist ihre Verwendung als Netz- und Dispergiermittel für Pigmente, die Lacksystemen eingesetzt werden sollen, die Celluloseacetobutyrat (CAB) als Bestandteil enthalten. Wie dem Fachmann bekannt ist, neigen solche Lacksysteme zu starker Aggregation von Pigmenten. Durch den Einsatz der erfindungsgemäßen Additive konnten aggregationsfreie Pigmentlacke mit guten anwendungstechnischen Eigenschaften hergestellt werden.

**Tabelle 13 Rezeptur des Malqutes zur Herstellung eines CAB-haltigen Lackes**

| | Additiv mit 40% Wirksubstanz | Additiv mit 100% Wirksubstanz |
|---|---|---|
| Dynapol H 703, 65 %ig in Xylol*¹ | 49,0 | 49,0 |
| Gasruß FW 200 *² | 8,0 | 8,0 |
| Additiv | 14,0 | 5,6 |
| Butylacetat | 29,0 | 37,4 |
| | 100,0 | 100,0 |

| | | |
|---|---|---|
| *¹ Dynapol H 703 ist ein Polyesterharz der Fa. Degussa AG | | |
| *² Gasruß FW 200 ist ein Rußpigment der Fa. Degussa AG | | |

100 Teile der oben angegebenen Mischung werden mit 100 Teilen Glasperlen (1 mm Durchmesser) versetzt und mittels einer Polypropylenscheibe von 40 mm Durchmesser bei einer Umfangsgeschwindigkeit von 23 m/s bei 40°C 60 min in einer vertikalen Perlmühle der Fa Getzmann (Dispermat CV) dispergiert. Nach dem Absieben der Glasperlen wird der Lack gemäß folgen der Rezeptur komplettiert.

**Tabelle 14 Auflackmaterial**

| | |
|---|---|
| Dynapol H 703, 65 %ig in Xylol | 34,7 |
| CAB-Lösung *¹ | 42,6 |
| Maprenal MF 650 *² | 20,9 |
| Byk 306 *³ | 1,8 |
| | 100,0 |

| | |
|---|---|
| *¹ CAB-Lösung bestehend aus 15 Teile CAB 381-2, der Fa. Eastman Chem. Comp. in 85 Teilen Butylacetat / Xylol : 2/1 | |
| *² Maprenal MF 650 ist ein Melaminharz der Fa. Solutia | |
| *³ Byk 306 ist ein Verlaufsadditiv der Fa. BYK Chemie GmbH | |

**Tabelle 15 Auflackung**

| | |
|---|---|
| Malgut | 13,2 |
| Auflackmaterial | 36,3 |
| Butylacetat | 50,5 |
| | 100,0 |

Die Komponenten der Auflackung wurde 10 min in einem Scandex-Rüttler vermischt, dann 1:1 mit Butylacetat verdünnt und auf Polyesterfolie aufgegossen. Der Lack wurde 15 min bei Raumtemperatur abgelüftet und nachfolgend bei 140°C 30 min in einem Lacktrockenschrank eingebrannt. Die Güte des Lackes wurde visuell beurteilt.

**Tabelle 16 Visuelle Beurteilung des Lackes mit verschiedenen Additiven**

| Verwendetes Additiv aus | Visuelle Beurteilung des Lackes |
|---|---|
| Beispiel 9 | Glänzende, transparente Beschichtung ohne erkennbare Pigmentaggregate |
| Beispiel 11 | Glänzende, transparente Beschichtung ohne erkennbare Pigmentaggregate |
| Disperbyk 161 *¹ | Glänzende Beschichtung mit verminderter Transparenz und deutlich sichtbaren Pigmentaggregaten. |

| | |
|---|---|
| ¹ Bei Disperbyk 161 handelt es sich um ein Netz- und Dispergiermittel der Byk-Chemie, das als Stand der Technik für hochwertige Beschichtungen angesehen werden kann. | |

Auch für CAB-haltige Lacksysteme konnten die ausgezeichneten Qualitäten, speziell in Hinblick auf die Breite der Anwendbarkeit der erfindungsgemäßen Produkte, als Netz- und Dispergiermittel in verschiedenen Lackformulierungen gezeigt werden.

## Patentansprüche

1. Alkoxylierte Epoxyd-Amin-Addukte mit einem zahlenmittleren Molekulargewicht vom mehr als 500 g/Mol, die herstellbar sind durch die Umsetzung von
A) Mono- und/oder Polyepoxyden mit mindestens 8 Kohlenstoffatomen mit
B) primären und/oder sekundären Aminen und/oder primären und/oder sekundären Alkanolaminen und/oder sekundären Alkylalkanolaminen unter Bildung eines Addukts mit einer oder mehreren sekundären OH-Gruppen und nachfolgende Alkoxylierung des Addukts mit
C) Alkylenoxyden.

2. Epoxyd-Amin-Addukte nach Anspruch 1, **dadurch gekennzeichnet, dass** als Komponente A) aromatische Mono- und/oder Polyepoxyde eingesetzt werden.

3. Epoxyd-Amin-Addukte nach Anspruch 1 bis 2, **dadurch gekennzeichnet, dass** die bei der Alkoxylierung entstandenen OH-Gruppen mit Hydroxycarbonsäuren und/oder cyclischen Lactonen zu (Poly)esterresten umgesetzt worden sind.

4. Epoxyd-Amin-Addukte nach Anspruch 1 bis 3, **dadurch gekennzeichnet, dass** die bei der Alkoxylierung oder Polyveresterung entstandenen OH-Gruppen verestert oder verethert worden sind.

5. Epoxyd-Amin-Addukte nach Anspruch 1 bis 3, **dadurch gekennzeichnet, dass** die bei der Alkoxylierung oder Polyveresterung entstandenen OH-Gruppen mit Mono- und/oder Polyisocyanaten oder mit Polyisocyanataddukten, die mindestens eine freie Isocyanatgruppe aufweisen, zu Urethangruppen umgesetzt worden sind.

6. Epoxyd-Amin-Addukte nach Anspruch 1 bis 5, **dadurch gekennzeichnet, dass** sie mit Phosphorsäure oder Polyphosphorsäure und/oder sauren Phosphorsäureestern und/oder Carbonsäuren unter Salzbildung weiter umgesetzt worden sind.

7. Epoxyd-Amin-Addukte nach Anspruch 1 bis 3, **dadurch gekennzeichnet, dass** die bei der Alkoxylierung oder Polyveresterung entstandenen OH-Gruppen zu sauren Phosphorsäureestergruppen umgesetzt worden sind.

8. Epoxyd-Amin-Addukte nach Anspruch 1 bis 5, **dadurch gekennzeichnet, dass** die in den Addukten vorhandene Aminogruppe oder die Aminogruppen durch Alkylierung oder Oxydation unter Ausbildung von quaternären Ammoniumsalzen oder N-Oxyden weiter umgesetzt worden sind.

9. Verfahren zur Herstellung von alkoxylierten Epoxyd-Amin-Addukten, **dadurch gekennzeichnet, dass**
A) Mono- und/oder Polyepoxyde mit mindestens 8 Kohlenstoffatomen mit
B) primären und/oder sekundären Aminen und/oder primären und/oder sekundären Alkanolaminen und/oder sekundären Alkylalkanolaminen unter Bildung eines Addukts mit einer oder mehreren sekundären OH-Gruppen umgesetzt werden und das erhaltene Addukt in einem nachfolgenden Schritt mit
C) Alkylenoxyden zu basischen Polyalkylenoxyden mit einem zahlenmittleren Molekulargewicht von mehr als 500 g/Mol weiter umgesetzt wird.

10. Verfahren nach Anspruch 9, **dadurch gekennzeichnet, dass** als Komponente A) aromatische Mono- und/oder Polyepoxyde eingesetzt werden.

11. Verfahren nach Anspruch 9 oder 10, **dadurch gekennzeichnet, dass** die bei der Alkoxylierung entstandenen OH-Gruppen mit Hydroxycarbonsäuren und/oder cyclischen Lactonen zu Polyesterresten umgesetzt werden.

12. Verfahren nach Anspruch 9 bis 11, **dadurch gekennzeichnet, dass** die bei der Alkoxylierung oder Polyveresterung entstandenen OH-Gruppen verestert oder verethert werden.

13. Verfahren nach Anspruch 9 bis 11, **dadurch gekennzeichnet, dass** die bei der Alkoxylierung oder Polyveresterung entstandenen OH-Gruppen mit Mono- und/oder Polyisocyanaten oder mit Polyisocyanataddukten, die mindestens eine freie Isocyanatgruppe aufweisen, zu Urethangruppen umgesetzt werden.

14. Verfahren nach Anspruch 9 bis 11, **dadurch gekennzeichnet, dass** die bei der Alkoxylierung oder Polyveresterung entstandenen OH-Gruppen zu sauren Phosphorsäureestergruppen umgesetzt werden.

15. Verfahren nach Anspruch 9 bis 13, **dadurch gekennzeichnet, dass** die in den Adukkten enthaltende Aminogruppe oder die Aminogruppen mit Phosphorsäure oder Polyphosphorsäure und/oder sauren Phosphorsäureestern und/oder Carbonsäuren unter Salzbildung weiter umgesetzt werden.

16. Verfahren nach Anspruch 9 bis 13, **dadurch gekennzeichnet, dass** die in den Addukten vorhandene Aminogruppe oder die Aminogruppen durch Alkylierung oder Oxydation unter Ausbildung von quaternären Ammoniumsalzen oder N-Oxyden weiter umgesetzt werden.

17. Verwendung der Epoxyd-Amin-Addukte nach Anspruch 1 bis 8 als Netz- und Dispergiermittel für organische und anorganische Pigmente und Füllstoffe.

18. Pulver- oder faserförmige Feststoffe, die mit Epoxyd-Amin-Addukten nach Anspruch 1 bis 8 beschichtet sind.
